# EUROPEAN PATENT SPECIFICATION

(11) **EP 1 969 664 B1**
(45) Date of publication and mention of the grant of the patent: **01.04.2015**
(21) Application number: 06816179.3
(22) Date of filing: 03.10.2006
(51) Int. Cl.: H01M 8/00, H01M 8/12, H01M 8/24

(54) **SEAMLESS SOLID OXIDE FUEL CELL**
NAHTLOSE FESTOXID-BRENNSTOFFZELLE
PILE A COMBUSTIBLE A OXYDE SOLIDE SANS SOUDURE

(30) Priority: 06.01.2006 US 326700
(43) Date of publication of application: 17.09.2008
(73) Proprietor: Siemens Energy, Inc., Orlando, FL 32826-2399 (US)
(72) Inventor: DIGIUSEPPE, Gianfranco, Grand Blanc, MI 48439-2603 (US)
(74) Representative: Maier, Daniel Oliver
(86) International application number: PCT/US2006/038732
(87) International publication number: WO 2007/081413

(56) References cited:
- EP-A1- 0 285 727
- EP-A1- 0 320 087
- EP-A2- 1 453 128
- WO-A-2005/117192
- WO-A2-01/71841
- WO-A2-02/21621
- LU Y ET AL: "Numerical study of a flat-tube high power density solid oxide fuel cell - Part I. Heat/mass transfer and fluid flow" JOURNAL OF POWER SOURCES, ELSEVIER, AMSTERDAM, NL, vol. 140, no. 2, 2 February 2005 (2005-02-02), pages 331-339, XP004917743 ISSN: 0378-7753
- SINGHAL S C: "Advances in solid oxide fuel cell technology" SOLID STATE IONICS, NORTH HOLLAND PUB. COMPANY. AMSTERDAM, NL, vol. 135, no. 1-4, 1 November 2000 (2000-11-01), pages 305-313, XP004221563 ISSN: 0167-2738

## Description

The U.S. Government has a paid-up license in this invention and the right in limited circumstances to require the patent owner to license others on reasonable terms as provided for by the terms of DE-FC26-02NT41247 awarded by DOE.

### Field of the Invention

The field of the invention relates to fuel cells, and more particularly to the shape and structure of solid oxide fuel cells.

### Background

Solid oxide electrolyte fuel cells (SOFC) are known in the art and exemplified by Isenberg in US Patent 4,395,468. Designs may be tubular or flat, and comprise open or closed ended, axially elongated, ceramic tube air electrode material, covered by thin film solid electrolyte material. The electrolyte layer is covered by cermet fuel electrode material, except for a thin, axially elongated interconnection material. The flat type fuel cells comprise a flat array of electrolyte and interconnect walls or ribs, where electrolyte walls contain thin, flat layers of cathode and anode materials sandwiching an electrolyte.

Flat and tubular solid oxide fuel cells are also known from Lu Y et al. J. Power Sources 140 (2), 331 339 (2005), Singhal S.C., Solid state ionics 135, 305-313 (2000), WO 01 71 841, WO 2005 117192 and EP 1453 128.

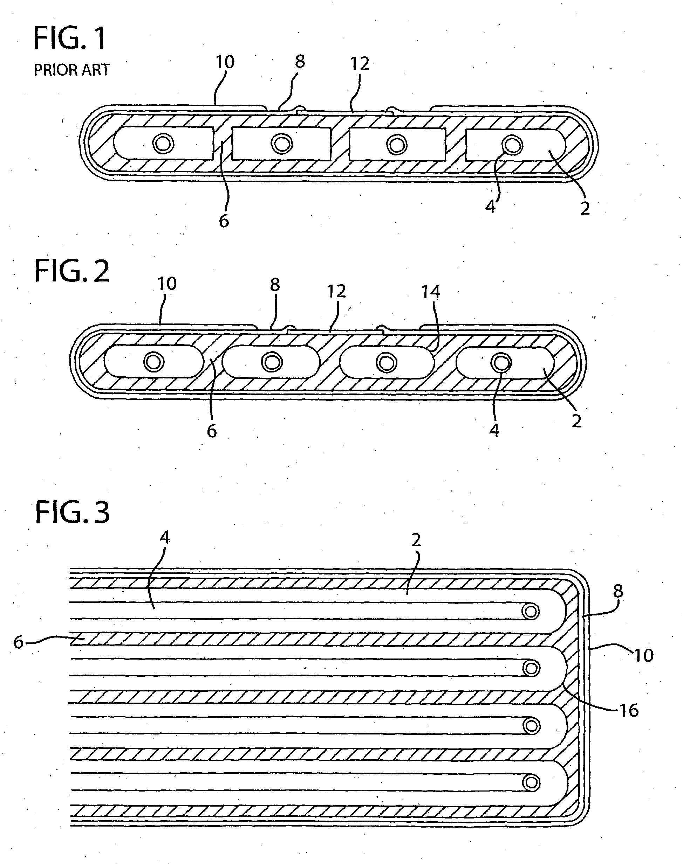

An example of one type of flat SOFC is shown in Fig. 1. The flat fuel cell is comprised of annular space **2** where the air flows, and, if capped, contains air feed tubes **4.** Between the annular spaces are ribs **6** which are comprised of the ceramic material. Over this is the solid electrolyte **8,** and anode **10,** which are formed around the interconnection **12.** The cross-section of each of the annular spaces is elongated for maximum balance between oxidization and diffusion, while reducing the amount of bulk material for weight considerations. Fuel cells of this design, however, are subject to thermal stresses, which interfere with the performance of the cell. High thermal stresses will result in catastrophic failure, causing cracks in the cell.

What is needed is an apparatus that is more robust and tolerant to thermal stresses. Other difficulties with the prior art also exist, some of which will be apparent upon further reading.

### Summary of the Invention

With the foregoing in mind, methods and apparatuses consistent with the present invention, which inter alia facilitates the bearing of stresses within a flat design solid oxide fuel cell. Fuel cell of the prior art have not been seamless in that they have sharp internal edges where stresses can accumulate. By providing rounded edges, the fuel cells will not accumulate stresses and therefore be more robust. The seamless design can be applied to the cross-sectional shape as well as to capped ends.

These and other objects, features, and advantages in accordance with the present invention are provided particular embodiments by providing a flat solid oxide fuel cell that comprises a series of ellipsoidal annular spaces, with ribs separating the ellipsoidal annular spaces, as well as an electrolyte layer and an anode layer. The ellipsoidal annular spaces have an ellipsoidal cross-section that have exclusively rounded edges.

In the inventive embodiment the fuel cell has a closed end and an open end, and air tubes feed down the length of the annular spaces. The closed end has exclusively rounded edges, and is integrally formed with the rest of the full cell body. The closed end has a thicker wall thickness than the wall thickness of the rest of the fuel cell, and may have a wall thickness of approximately 1.5-2.0 mm.

In other particular embodiments, the ellipsoidal cross-section is in the shape of a rounded rectangle. Other shapes include true ellipses and ovals. The ellipsoidal cross-section has a length to width ratio of approximately 1:2 to 1:3.

In another embodiment the present invention comprises a flat solid oxide fuel cell that comprises a series of annular spaces with ribs separating the annular spaces, as well as an electrolyte layer, and an anode layer. The annular spaces have an open end and a closed end, and the closed end has exclusively rounded edges.

In still another embodiment the present invention comprises a seamless flat solid oxide fuel cell that comprises an anode layer, an electrolyte layer, and a cathode. The cathode contains a series of ellipsoidal annular spaces and the series of ellipsoidal annular spaces have an open end and a closed end. Ribs separate the ellipsoidal annular spaces and the closed end has exclusively rounded edges. The fuel cell may have 4-6 ellipsoidal annular spaces in some embodiments.

Other embodiments of the present invention also exist, which will be apparent upon further reading of the detailed description.

### Brief Description of the Figures

The invention is explained in more detail by way of example with reference to the following drawings:
Figure 1 illustrates a flat fuel cell of the prior art.
Figure 2 illustrates a flat fuel cell with seamless edges according to one embodiment of the present invention.
Figure 3 illustrates a flat fuel cell with seamless ends according to another embodiment of the present invention.

### Detailed Description of the Invention

The present invention provides for a seamless solid oxide fuel cell. In the prior art, flat fuel cells have ribs that create sharp corners within the annular spaces. This creates areas that are subject to thermal stresses which can adversely affect the performance of the SOFC. Furthermore, the capped ends of the fuel cells create more areas within the annular spaces that can create thermal stresses.

The present invention reduces thermal stress and increases performance of the fuel cells by providing solid oxide fuel cells that have seamless annular spaces. The seamlessness means that the sharps corners otherwise present in flat fuel cell annular spaces are rounded. The particular embodiments have ellipsoidal annular spaces that are rounded where the ribs are formed as well as being rounded at the capped ends. These embodiments may be practiced independently or in conjunction with one-another.

Stresses concentrate in square and sharp corners and may cause cell failure. The number of ribs present will depend on the desired power output and/or desired cost per cell. A typical cell design as shown in the figures have a material stress strength of about 30 mega Pascals (MPa), though this number will vary for different designs and materials. If the accumulated stresses approach the 30 MPa range, then the failure of the material becomes more and more likely. By changing the geometry of the cells so that sharp corners are not present, the stresses do not accumulate as readily and therefore are not as prone to failure. It should be noted that the cell wall thickness should not exceed values where pore diffusion is compromised and cell performance lowered.

Referring to Fig. 2, an embodiment of the present invention is shown. The flat SOFC comprises annular spaces **2** and, if capped, contains air feed tubes **4.** Between the annular spaces are ribs **6** which are comprised of the ceramic material. Over this is the solid electrolyte **8,** and anode **10,** which are formed around the interconnection **12**. The annular spaces are elongated for better performance as discussed above, but unlike the annular spaces of the prior art, these are ellipsoidal in cross section and have rounded corners **14** where they connect to the ribs.

The annular of the present invention therefore have ellipsoidal cross-sections. Although, as shown in Fig. 2, they do not have to be true ellipses and can take the shape more of rounded rectangles. The general cross-sectional width to length will vary depending on the model, but will typically fall in the range of about 2:1 to 3:1.

Fig. 3 shows another embodiment of the present invention which may be used alone or in conjunction with the embodiment shown in Fig. 2. In this embodiment a length-wise cross section of the cell is shown, with the annular spaces **2,** ribs **6,** the solid electrolyte **8,** and anode **10.** In this embodiment the air feed tubes **4** are present because the ends of the annular spaces are closed. Unlike the prior art that caps the end of the cells and creates sharp edges, the present invention continues the seamless design at the ends to produce rounded corners **16.**

This seamless closing of the cell may be performed through extrusion so that the cell is a single piece, or it may be die cast and attached separately. The ellipsoidal closed end allows the cell to withstand greater thermal gradient from the incoming fuel to the air inside the cell. The radius at the closed end may vary depending on the model, but will be in approximately the range of 3.0mm. The thickness of the closed end wall can be the same thickness as the wall of the annular spaces, but does not necessarily have to be so. A thicker end wall can withstand greater stresses.

In one embodiment the present invention provides for a flat solid oxide fuel cell that comprises a series of ellipsoidal annular spaces, with ribs separating the ellipsoidal annular spaces, as well as an electrolyte layer and an anode layer. The ellipsoidal annular spaces have an ellipsoidal cross-section that have exclusively rounded edges.

In particular embodiments the fuel cell has a closed end and an open end, and air tubes feed down the length of the annular spaces. The closed end may have exclusively rounded edges, and may be integrally formed with the rest of the full cell body. In some embodiments the closed end has a thicker wall thickness than the wall thickness of the rest of the fuel cell, and may have a wall thickness of approximately 1.5-2.0 mm.

In other particular embodiments, the ellipsoidal cross-section is in the shape of a rounded rectangle. Other shapes include true ellipses and ovals. The ellipsoidal cross-section has a length to width ratio of approximately 1:2 to 1:3.

In another embodiment the present invention comprises a flat solid oxide fuel cell that comprises a series of annular spaces with ribs separating the annular spaces, as well as an electrolyte layer, and an anode layer. The annular spaces have an open end and a closed end, and the closed end has exclusively rounded edges.

In particular embodiments the closed ends are formed through extrusion molding. In other embodiments, the annular spaces have an ellipsoidal cross-section that have exclusively rounded edges, and the closed end has a thicker wall thickness than the wall thickness of the rest of the fuel cell.

In still another embodiment the present invention comprises a seamless flat solid oxide fuel cell that comprises an anode layer, an electrolyte layer, and a cathode. The cathode contains a series of ellipsoidal annular spaces and the series of ellipsoidal annular spaces have an open end and a closed end. Ribs separate the ellipsoidal annular spaces and the closed end has exclusively rounded edges. The fuel cell may have 4-6 ellipsoidal annular spaces in some embodiments.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the inventions which, is to be given the full breadth of the claims appended .

## Claims

1. A flat-tube solid oxide fuel cell, comprising:
a series of ellipsoidal annular spaces (2);
ribs (6) separating said ellipsoidal annular spaces (2);
an electrolyte layer (8); and
an anode layer (10);
wherein said ellipsoidal annular spaces (2) have an elongate, ellipsoidal cross-section that has exclusively rounded edges (14);
wherein said fuel cell has a closed end and an open end, and wherein air tubes (4) are inserted within and feed down the length of said annular spaces (2);
**characterised in that** said closed end has exclusively rounded edges (16);
wherein said closed end is integrally formed with the rest of the flat-tube solid oxide full cell;
wherein said closed end has a thicker wall thickness than the wall thickness of the rest of the flat-tube solid oxide fuel cell, the wall thicknesses being those between said annular spaces (2) and the exterior of the flat-tube solid oxide fuel cell;
wherein said closed end is formed through extrusion molding.

2. The flat-tube solid oxide fuel cell of claim 1, wherein said closed end of the flat-tube solid oxide fuel cell has a wall thickness of 1.5-2.0 mm, the wall thickness being that at the closed end between said annular spaces (2) and the exterior of the flat-tube solid oxide fuel cell.

3. The flat-tube solid oxide fuel cell of claim 1, wherein said ellipsoidal cross-section is in the shape of a rounded rectangle comprising a pair of opposite shorter sides and a pair of opposite longer sides, each shorter side substantially comprising a semicircle.

4. The flat-tube solid oxide fuel cell of claim 1, wherein said ellipsoidal cross-section has a length to width ratio of 1:2 to 1:3.

5. The flat-tube solid oxide fuel cell of claim 1, wherein said flat-tube solid oxide fuel cell has 4-6 ellipsoidal annular spaces (2).

## Patentansprüche

1. Flachrohr-Festoxidbrennstoffzelle, welche umfasst:
eine Reihe von ellipsoiden Ringräumen (2);
Rippen (6), welche diese ellipsoiden Ringräume (2) trennen;
eine Elektrolytschicht (8); und
eine Anodenschicht (10);
wobei die ellipsoiden Ringräume (2) einen lang gestreckten, ellipsoiden Querschnitt aufweisen, welcher ausschließlich abgerundete Kanten (14) aufweist;
wobei die Brennstoffzelle ein geschlossenes Ende und ein offenes Ende aufweist, und wobei Luftrohre (4) in die Ringräume (2) eingesetzt sind und sich entlang der Länge derselben in sie hinein erstrecken;
**dadurch gekennzeichnet, dass** das geschlossene Ende ausschließlich abgerundete Kanten (16) aufweist;
wobei das geschlossene Ende mit dem restlichen Teil der Flachrohr-Festoxidbrennstoffzelle einstückig ausgebildet ist;
wobei das geschlossene Ende eine Wanddicke aufweist, die größer als die Wanddicke des restlichen Teils der Flachrohr-Festoxidbrennstoffzelle ist, wobei die Wanddicken die Dicken zwischen den Ringräumen (2) und der Außenseite der Flachrohr-Festoxidbrennstoffzelle sind;
wobei das geschlossene Ende durch Strangpressen ausgebildet ist.

2. Flachrohr-Festoxidbrennstoffzelle nach Anspruch 1, wobei das geschlossene Ende der Flachrohr-Festoxidbrennstoffzelle eine Wanddicke von 1,5-2,0 mm aufweist, wobei die Wanddicke diejenige an dem geschlossenen Ende zwischen den Ringräumen (2) und der Außenseite der Flachrohr-Festoxidbrennstoffzelle ist.

3. Flachrohr-Festoxidbrennstoffzelle nach Anspruch 1, wobei der ellipsoide Querschnitt die Form eines abgerundeten Rechtecks hat, das ein Paar gegenüberliegender kürzerer Seiten und ein Paar gegenüberliegender längerer Seiten umfasst, wobei jede kürzere Seite im Wesentlichen einen Halbkreis umfasst.

4. Flachrohr-Festoxidbrennstoffzelle nach Anspruch 1, wobei der ellipsoide Querschnitt eine Verhältnis Länge zu Breite von 1:2 bis 1:3 aufweist.

5. Flachrohr-Festoxidbrennstoffzelle nach Anspruch 1, wobei die Flachrohr-Festoxidbrennstoffzelle 4-6 ellipsoide Ringräume (2) aufweist.

## Revendications

1. Pile à combustible à oxyde solide à tube plat, comprenant :
une série d'espaces annulaires ellipsoïdaux (2) ;
des nervures (6) séparant lesdits espaces annulaires ellipsoïdaux (2) ;
une couche électrolytique (8), et
une couche anodique (10) ;
étant entendu que lesdits espaces annulaires ellipsoïdaux (2) ont une section transversale allongée, ellipsoïdale, présentant exclusivement des bords arrondis (14) ;
étant entendu que ladite pile à combustible comporte une extrémité fermée et une extrémité ouverte, et que des tubes à air (4) sont insérés à l'intérieur et alimentent lesdits espaces annulaires (2) sur toute leur longueur,
**caractérisée en ce que** ladite extrémité fermée présente exclusivement des bords arrondis (16) ;
en ce que ladite extrémité fermée fait partie intégrante du reste de la pile à combustible à oxyde solide à tube plat ;
en ce que ladite extrémité fermée comporte une paroi dont l'épaisseur est plus grande que celle de la paroi du reste de la pile à combustible à oxyde solide à tube plat, les épaisseurs des parois étant celles comprises entre lesdits espaces annulaires (2) et l'extérieur de la pile à combustible à oxyde solide à tube plat ;
en ce que ladite extrémité fermée est réalisée par moulage par extrusion.

2. Pile à combustible à oxyde solide à tube plat selon la revendication 1, dans laquelle ladite extrémité fermée de la pile à combustible à oxyde solide à tube plat comporte une paroi d'une épaisseur de 1,5-2 mm, l'épaisseur de la paroi étant celle à l'extrémité fermée, comprise entre lesdits espaces annulaires (2) et l'extérieur de la pile à combustible à oxyde solide à tube plat.

3. Pile à combustible à oxyde solide à tube plat selon la revendication 1, dans laquelle ladite section transversale ellipsoïdale a la forme d'un rectangle arrondi comprenant une paire de petits côtés opposés et une paire de grands côtés opposés, chaque petit côté consistant sensiblement en un demi-cercle.

4. Pile à combustible à oxyde solide à tube plat selon la revendication 1, dans laquelle ladite section transversale ellipsoïdale a un rapport longueur sur largeur de 1:2 à 1:3.

5. Pile à combustible à oxyde solide à tube plat selon la revendication 1, dans laquelle ladite pile à combustible à oxyde solide à tube plat comprend 4-6 espaces annulaires ellipsoïdaux (2).
